(19) Europäisches Patentamt
European Patent Office
Office européen des brevets

(11) **EP 4 027 274 B1**

(12) **EUROPEAN PATENT SPECIFICATION**

(45) Date of publication and mention
of the grant of the patent:
**03.09.2025 Bulletin 2025/36**

(21) Application number: **19944009.0**

(22) Date of filing: **03.09.2019**

(51) International Patent Classification (IPC):
***G06N 10/60*** *(2022.01)* ***G06N 10/40*** *(2022.01)*

(52) Cooperative Patent Classification (CPC):
**G06N 10/60;** G06N 10/40

(86) International application number:
**PCT/JP2019/034618**

(87) International publication number:
**WO 2021/044516 (11.03.2021 Gazette 2021/10)**

(54) **ARITHMETIC APPARATUS, ARITHMETIC METHOD, AND COMPUTER PROGRAM**

ARITHMETISCHE VORRICHTUNG, ARITHMETISCHES VERFAHREN UND
COMPUTERPROGRAMM

DISPOSITIF ARITHMÉTIQUE, MÉTHODE ARITHMÉTIQUE ET PROGRAMME D'ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.07.2022 Bulletin 2022/28**

(73) Proprietors:
• **NEC Corporation**
**108-8001 Tokyo (JP)**
• **INSTITUTE OF SCIENCE TOKYO**
**Tokyo 152-8550 (JP)**

(72) Inventors:
• **SUSA, Yuki**
**Tokyo 108-8001 (JP)**
• **NISHIMORI, Hidetoshi**
**Tokyo 152-8550 (JP)**

(74) Representative: **Vossius & Partner
Patentanwälte Rechtsanwälte mbB
Siebertstraße 3
81675 München (DE)**

(56) References cited:
• WOLFGANG LECHNER: "Quantum Approximate Optimization with Parallelizable Gates", ARXIV.ORG, CORNELL UNIVERSITY LIBRARY, 201 OLIN LIBRARY CORNELL UNIVERSITY ITHACA, NY 14853, 4 February 2018 (2018-02-04), XP081222834, Retrieved from the Internet <URL:https://arxiv.org/pdf/1802.01157.pdf>
• SEKI YUYA ET AL: "Quantum annealing with antiferromagnetic fluctuations", PHYSICAL REVIEW E (STATISTICAL, NONLINEAR, AND SOFT MATTER PHYSICS), vol. 85, no. 5, 27 April 2012 (2012-04-27), US, XP055803242, ISSN: 1539-3755, Retrieved from the Internet <URL:https://arxiv.org/pdf/1203.2418v2.pdf> DOI: 10.1103/PhysRevE.85.051112
• HARTMANN, ANDREAS ET AL.: "Quantum Phase Transition with Inhomogeneous Driving in the LHZ mode I", ARXIV:1906.11459V2, vol. 1, 27 June 2019 (2019-06-27), pages 1 - 14, XP081647242, Retrieved from the Internet <URL:https://arxiv.org/pdf/1906.11459.pdf>
• SEKI, YUYA ET AL.: "Quantum annealing with antiferromagnetic fluctuations", vol. 2, 27 April 2012 (2012-04-27), pages 1 - 19, XP055803242, Retrieved from the Internet <URL:https://arxiv.org/pdf/1203.2418.pdf>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present disclosure relates to an arithmetic apparatus, an arithmetic method, and a non-transitory computer readable medium storing a program.

### Background Art

Quantum annealing is a method of solving a combinatorial optimization problem by using a quantum fluctuation. The combinatorial optimization problem is a problem of searching for an optimal set of variables on the basis of a specified evaluation (objective) function, such as the traveling salesman problem, for example.

The traveling salesman problem is a problem of finding the shortest possible route when a salesman visits each of given cities exactly once and returns to the origin city. Regarding this traveling salesman problem, it is known that as the number of cities increases, the number of possible routes increases explosively, which makes it extremely difficult to find an optimal solution.

In quantum annealing, an optimal solution of the combinatorial optimization problem is calculated as the ground state of the Ising model. Specifically, quantum annealing searches for the ground state of the Ising model from possible values of a plurality of quantum bits.

Quantum annealing first applies quantum fluctuations to all quantum bits. Next, in the process of reducing quantum fluctuations, it strengthens interactions between quantum bits defined on the basis of the combinatorial optimization problem. Then, by reading the state of quantum bits, the ground state of the Ising model is obtained, and thereby a solution of the combinatorial optimization problem is obtained.

The Hamiltonian used in quantum annealing is represented by the sum of a constraint term corresponding to a constraint condition to be met by quantum bits and an objective term to be optimized. In the related art, a weighting coefficient of the objective term and a weighting coefficient of the constraint term are increased at the same rate in the process of reducing quantum fluctuations.

On the other hand, Patent Literature 1 discloses a technique of solving a combinatorial optimization problem by using a neural network. Patent Literature 1 defines the sum of a function $\varphi_1$ representing a constraint condition and an objective function $\varphi_2$ as a total energy function $\varphi$. An optimal solution or a suboptimal solution is obtained by setting the initial state to the neural network and making a state transition according to a transition rule that reduces the total energy function $\varphi$.

Patent Literature 1 shows that the accuracy rate is improved by setting the initial state so as to reduce $\varphi_1$. In this case, the effect of the constraint condition $\varphi_1$ is small in the early stage, and the effect of the constraint condition $\varphi_1$ increases with the passage of time.

### Citation List

#### Patent Literature

Patent Literature 1: Japanese Unexamined Patent Application Publication No. H08-050572 Wolfgang Lechner, "Quantum Approximate Optimization with Parallelizable Gates", ARXIV.ORG, CORNELL UNIVERSITY LIBRARY, 201 OLIN LIBRARY CORNELL UNIVERSITY ITHACA, NY 14853, (20180204), relates to quantum approximate optimization with parallelizable gates. Yuya Seki et al., "Quantum annealing with antiferromagnetic fluctuations", Phys. Rev. E 85, 051112, relates to antiferromagnetic quantum fluctuations into quantum annealing in addition to the conventional transverse-field term.

### Summary of Invention

#### Technical Problem

The technique disclosed in Patent Literature 1 appropriately sets the initial state of the neural network and thereby changes the degree of the effect of an objective term and the effect of a constraint term. However, since the technique disclosed in Patent Literature 1, which is applied to the neural network, is unable to be applied to quantum annealing, and therefore it is unable to apply the technique disclosed in Patent Literature 1 to quantum annealing and solve a combinatorial optimization problem.

The present invention has been accomplished to solve the above problem and an object of the present disclosure is thus to provide an arithmetic apparatus, an arithmetic method, and a non-transitory computer readable medium storing a program capable of adjusting the degree of the effect of an objective term and the effect of a constraint term in the process of reducing quantum fluctuations.

## Solution to Problem

The invention is set out in the independent claims. Preferred embodiments are set out in the dependent claims.

## Advantageous Effects of Invention

The invention is capable of changing the degree of the effect of an objective term and the effect of a constraint term in the process of reducing quantum fluctuations.

## Brief Description of Drawings

Fig. 1 is a schematic view showing an example of the ground state.
Fig. 2 is a schematic view showing an overview of searching for the ground state in quantum annealing.
Fig. 3 is a schematic view showing an overview of quantum annealing.
Fig. 4 is a schematic view showing an overview of the Hamiltonian in quantum annealing.
Fig. 5 is a graph showing the relationship between an optimal solution and a solution close to the optimal.
Fig. 6 is a graph showing an example of an energy difference in quantum annealing.
Fig. 7 is a schematic view showing an overview of the LHZ model.
Fig. 8 is a schematic view showing an overview of the fully connected Ising model.
Fig. 9 is a block diagram showing a configuration of an arithmetic apparatus according to a first example embodiment.
Fig. 10 is a block diagram showing a configuration of an arithmetic apparatus according to a second example embodiment.
Fig. 11 is a schematic view showing a change in a weighting coefficient of a constraint term according to the second example embodiment.
Fig. 12 is a graph showing the energy differences of 1000 random patterns of combinatorial optimization problems in the second example embodiment.
Fig. 13 is a graph showing a success percentage in the case where a weighting coefficient is set for each constraint term in an example of a randomly generated problem.
Fig. 14 is a graph showing the relationship between an energy difference and the power of C(s) in the second example embodiment.
Fig. 15 is a graph showing the relationship between an energy difference and the number of quantum bits in the second example embodiment.
Fig. 16 is a graph showing a phase diagram at absolute zero in the second example embodiment.
Fig. 17 is a graph showing a phase diagram at finite temperature in the second example embodiment.
Fig. 18 is a graph showing a phase diagram in the case of including a random magnetic field in the second example embodiment.
Fig. 19 is a graph showing the strength of phase transition in the second example embodiment.
Fig. 20 is a block diagram showing a configuration example of hardware.

## Example Embodiments

Prior to describing example embodiments, an overview of quantum annealing is described first. Quantum annealing is a method of solving a combinatorial optimization problem by using a quantum fluctuation. The quantum fluctuation is also called a transverse magnetic field.

The combinatorial optimization problem is a problem of searching for an optimal set of variables on the basis of a specified evaluation (objective) function. The combinatorial optimization problem is, for example, a problem of finding a combination of variables that minimizes a certain given evaluation function.

The combinatorial optimization problem can be solved by finding possible values of variables in a brute force way. In the case of a typical combinatorial optimization problem, the total number of combinations increases exponentially as the number of variables increases. Accordingly, the required computation time increases exponentially, which makes it difficult to solve the problem.

An example of the combinatorial optimization problem is the traveling salesman problem. The traveling salesman problem is a problem of finding a route with the minimum total travel cost (distance) among routes that visit each of given cities exactly once and then return to the origin city. In the traveling salesman problem, the total number of combinations when the number of cities is 5 is 120 patterns, and it is three million or more when the number of cities is 10 or more. Further, when the number of cities increases to 20, it is difficult to solve the problem in a brute force way with the practical computation time.

Quantum annealing is a method of solving a combinatorial optimization problem by converting the combinatorial optimization problem into the Ising model and searching for the ground state of the Ising model. The Ising model is a model where the Hamiltonian is represented by the following Expression (1).

[Expression 1]

$$H_{Ising} = -\sum_{i<j}^{N} J_{ij}\, \sigma_i^z \sigma_j^z - \sum_{i=1}^{N} h_i \sigma_i^z \quad \cdot \cdot \cdot (1)$$

The symbol $\sigma^z_i$ indicates a spin (quantum bit). The first term $J_{ij}$ on the right-hand side of Expression (1) is a coupling constant that represents the strength of interactions between $\sigma^z_i$ and $\sigma^z_j$. The second term $h_i$ on the right-hand side is a magnetic field. Converting the combinatorial optimization problem into the Ising model corresponds to setting the coupling constant in Expression (1). Quantum annealing searches for a non-trivial minimum energy state (ground state) corresponding to Expression (1). Then, an optimal combination of quantum bits is obtained from the ground state.

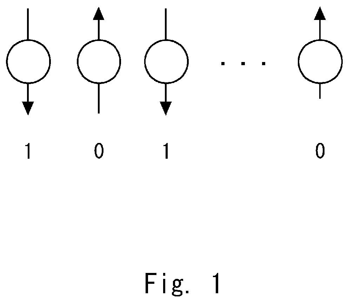

The non-trivial ground state is represented as the state of a spin as shown in Fig. 1. When the upward spin is 0 and the downward spin is 1, it can be represented as a combination of 0 and 1.

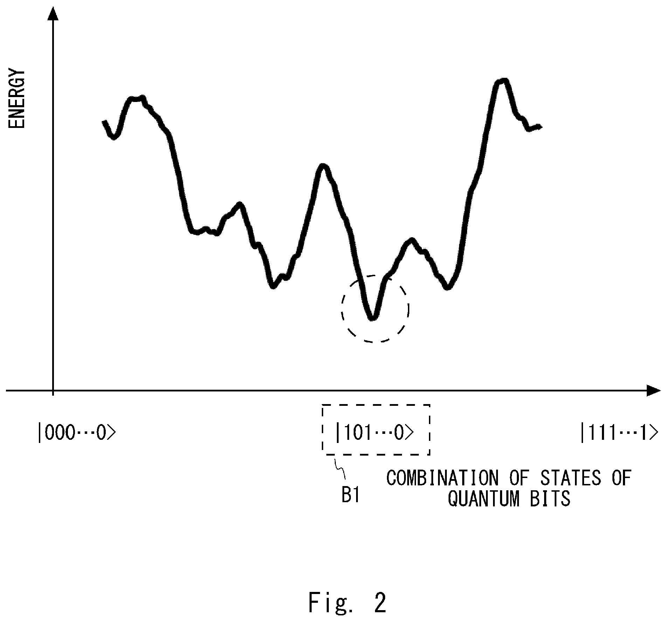

The vertical axis of Fig. 2 indicates the energy of the Ising model. The horizontal axis of the graph indicates a combination of possible states of quantum bits. The ground state B1 is obtained by searching for the state with the minimum energy.

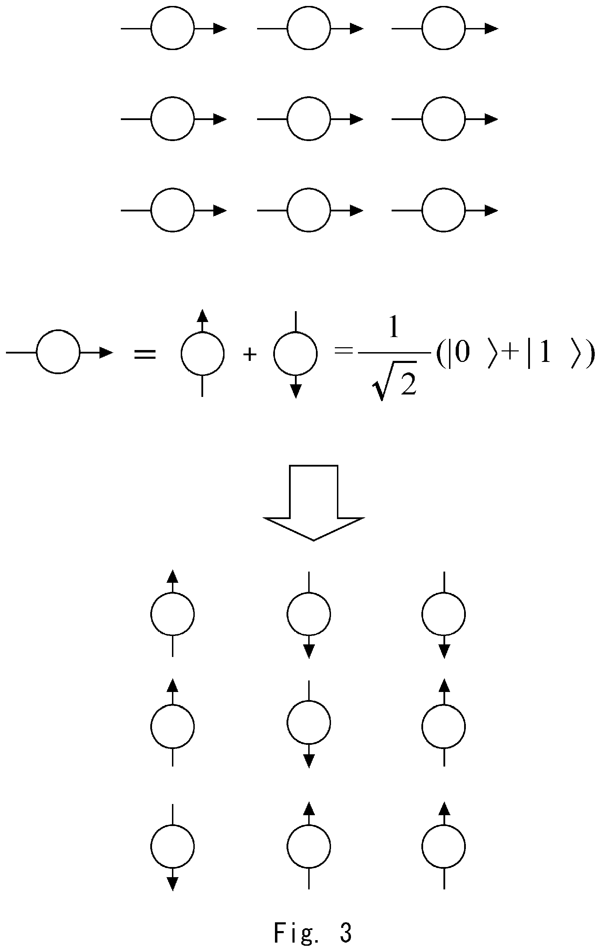

Fig. 3 is a schematic view showing an overview of quantum annealing. Quantum annealing first sets the Hamiltonian represented by Expression (1) on the basis of the combinatorial optimization problem. Next, it applies quantum fluctuations to all quantum bits in Expression (1). When quantum fluctuations are applied, the quantum bits become the state where an upward spin and a downward spin overlap. After that, quantum annealing gradually reduces quantum fluctuations, and simultaneously gradually increases interactions between quantum bits that represent the combinatorial optimization problem. As a result, a combination of quantum bits that minimizes the energy is obtained.

The above-described process is represented by Expression (2).

[Expression 2]

$$H(s) = -(1-s)\sum_{i=1}^{N} \sigma_i^x + s H_{Ising} \quad \cdot \cdot \cdot (2)$$

In Expression (2), $H_{Ising}$ is the Hamiltonian of the Ising model that is used for solving the combinatorial optimization problem. The symbol s is a parameter related to time, and it is an increasing function of time. At the start of annealing, s=0. At the completion of annealing, s=1. The symbol $\sigma^x_i$ is an x-component of the spin, and the first term on the right-hand side corresponds to the quantum fluctuations. The quantum fluctuation term serves as a driver for executing quantum annealing.

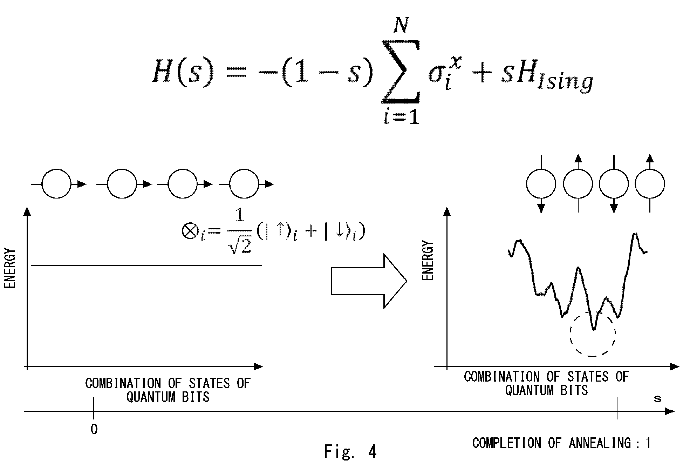

Fig. 4 is a schematic view showing an overview of the process of quantum annealing. At s=0, Expression (2) is only the first term on the right-hand side, and the quantum bits become the state where an upward spin and a downward spin overlap. At this time, the energy is constant for a combination of the states of quantum bits. At the completion of annealing, Expression (2) is only the second term on the right-hand side, and the quantum bits are the ground state of the Ising model. In other words, the quantum bits are the state corresponding to an optimal solution of the combinatorial optimization problem.

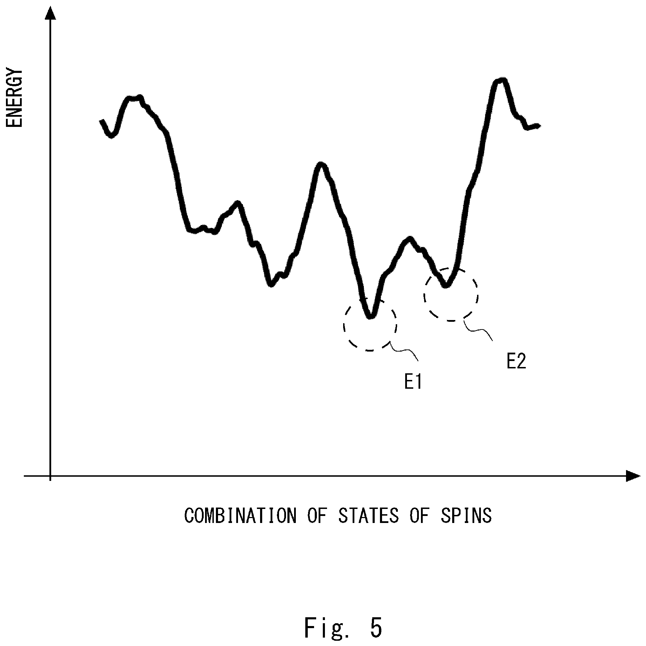

In quantum annealing, an optimal solution is definitely obtained by moving s from 0 to 1 over an infinite length of time. However, it is practically difficult to carry out computation for an infinite length of time. It is known that the lower limit of time required to obtain an optimal solution is obtained by an energy difference between an optimal solution and a solution close to the optimal. In Fig. 5, E1 is the energy of the optimal solution, and E2 is the energy of the solution close to the optimal. Then, the lower limit of required computation time can be estimated from a difference between E1 and E2.

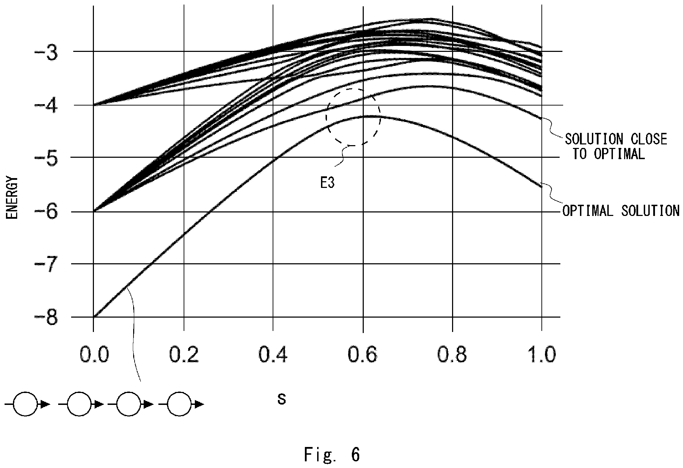

Fig. 6 is a graph showing an example of an energy difference in the process of quantum annealing. The horizontal axis is s. At s=0, the quantum bits are in the overlapping state, and s=1 is at the completion of annealing. In the area of E3, a difference between the energy indicating the optimal solution and the energy indicating the solution close to the optimal is minimum. When the minimum energy difference is min($\Delta$E), and the minimum time required to obtain the optimal solution is $t_0$, Expression (3) is established.

[Expression 3]

$$t_0 \propto \min(\Delta E)^{-2} \quad \cdot \quad \cdot \quad \cdot \quad (3)$$

In other words, in the case where the annealing time is fixed, the probability of obtaining an optimal solution is small when min($\Delta$E) is small.

In sum, quantum annealing is a method of finding a combination of bits (0,1) that minimizes the energy of the Ising model by using the quantum fluctuations. A difference in energy is related to the degree of difficulty of the combinatorial optimization problem. It can be considered that the more difficult the combinatorial optimization problem is, the smaller the energy difference is. Further, in general terms, it is known that the larger the number of (quantum) bits required to solve the problem is, the smaller the energy difference is. Thus, as the number of cities increases in the traveling salesman problem, for example, it becomes more difficult to solve the problem.

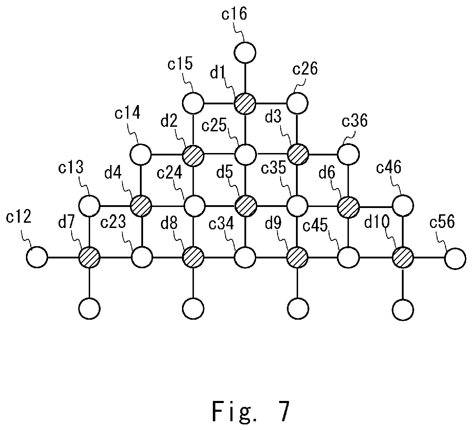

Next, the LHZ (W. Lechner, P. Hauke, and P. Zoller) model is described as a hardware configuration. Since the Ising model includes coupling between all quantum bits as represented by Expression (1), it is difficult to implement it as hardware. In view of this, the LHZ model as shown in Fig. 7 has been proposed (W. Lechner, P. Hauke, and P. Zoller, Sci Adv 1, (2015)). It is known that the LHZ model is a model that is logically equivalent to the Ising model, and is based on many-body interactions. The LHZ model can be implemented using hardware. The LHZ model is an architecture expressed by a local field in quantum bits and four-body interactions between quantum bits.

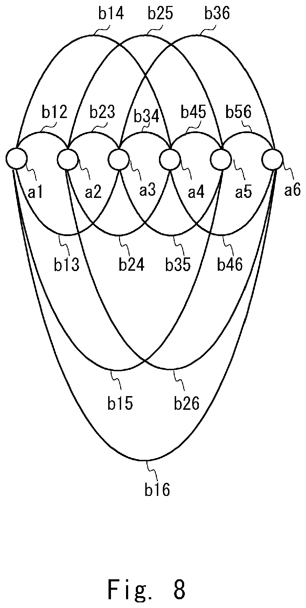

Fig. 8 shows the fully connected Ising model. Hereinafter, the relationship between the LHZ model shown in Fig. 7 and the fully connected Ising model shown in Fig. 8 is described. Quantum bits a1 to a6 in Fig. 8 are quantum bits in the fully connected Ising model. Couplings b12 to b56 represent couplings between the quantum bits a1 to a6 in the fully connected Ising model. For example, the coupling b12 represents the coupling between the quantum bits a1 and a2.

The quantum bits (physical bits) of the LHZ model shown in Fig. 7 are quantum bits c12 to c56. The quantum bits c12 to c56 correspond to the couplings b12 to b56 shown in Fig. 8. For example, the coupling b12 of the fully connected Ising model corresponds to the quantum bit c12 of the LHZ model. Interactions d1 to d10 indicate the many-body interactions in the LHZ model. For example, the interaction d1 represents four-body proximity interactions of the quantum bits c15, c16, c25, and c26.

When the LHZ model is used, the number K of physical bits that are required to represent the N logical bit is N(N-1)/2. The number of physical bits affects the energy difference that gives an indication of computation time of quantum annealing.

While the Hamiltonian of the fully connected Ising model is represented by Expression (1), the Hamiltonian is represented by Expression (4) when the LHZ model is used.

[Expression 4]

$$H_{LHZ} = -\sum_k^K J_k \, \sigma_k^z - \sum_l^L \sigma_{(l,n)}^z \sigma_{(l,s)}^z \sigma_{(l,e)}^z \sigma_{(l,w)}^z \quad \cdot \quad \cdot \quad \cdot \quad (4)$$

In the first term on the right-hand side, $J_{ij}$ in Expression (1) is replaced with $J_k$. The second term on the right-hand side in Expression (4), which is a term that represents a constraint condition to be satisfied by quantum bits, indicates the condition that the product of the four quantum bits around each of the interactions d1 to d10 is 1. The symbol l (l indicates the lower-case alphabet of "L") is a parameter that represents a constraint condition, and the number L of constraint conditions is (N-1)(N-2)/2.

In Expression (4), the second term on the right-hand side, which is a term representing a constraint condition imposed between quantum bits, is called a constraint term. Further, in Expression (4), the first term on the right-hand side is called an objective term. In this way, the constraint term is represented by many-body interactions of quantum bits. Further, the constraint term is represented by three or more body interactions in some cases. It is known that some of the combinatorial optimization problems involving many-body interactions are difficult to be solved by quantum annealing. Note that each of L number of terms representing the constraint condition in Expression (4) may be considered as a constraint term. In other words, Expression (4) can be considered to include a plurality of constraint terms.

Hereinafter, example embodiments will be described with reference to the drawings. Since the drawings are in a simplified form, the technical scope of the example embodiments should not be narrowly interpreted on the basis of the illustration of the drawings. Further, the same components are denoted by the same reference symbols and overlapping descriptions will be omitted.

<First Example Embodiment>

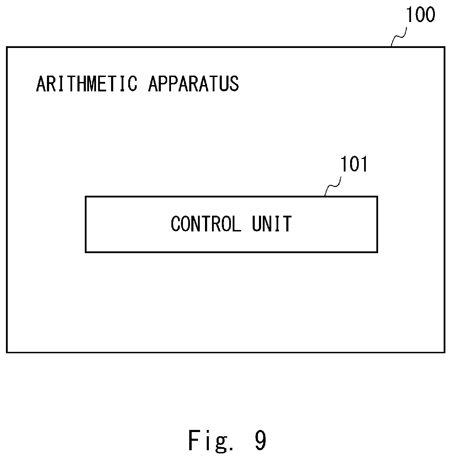

Fig. 9 is a block diagram showing a configuration of an arithmetic apparatus 100 according to a first example embodiment. The arithmetic apparatus 100 includes a control unit 101.

The arithmetic apparatus 100 is a device that calculates an optimal solution of a combinatorial optimization problem by quantum annealing. The combinatorial optimization problem is converted into the LHZ model or the like, and the arithmetic apparatus 100 obtains an optimal solution by calculating the ground state. In such a case, the Hamiltonian that represents the combinatorial optimization problem is represented by the sum of an objective term and a constraint term as in Expression (4).

It should be noted that this example embodiment is not limited to the case of using the LHZ model. It is applicable to other cases as long as the Hamiltonian that is set from the combinatorial optimization problem is classified into a constraint term representing a constraint condition imposed between quantum bits and an objective term different from that.

The arithmetic apparatus 100 includes quantum bit circuits composed of a plurality of quantum bits. Specifically, the arithmetic apparatus 100 searches for the ground state from possible states of the plurality of quantum bits. Further, the plurality of quantum bits are coupled with one another, and the strength of coupling is variable.

The arithmetic apparatus 100 increases a weight of the objective term and a weight of the constraint term in the process of reducing quantum fluctuations applied to the quantum bits. The Hamiltonian in quantum annealing is represented by Expression (5).

[Expression 5]

$$H = -A(s)[\text{quantum fluctuation term}] - (B(s)[\text{objective term}] +$$

$$C(s)[\text{constraint term}]) \cdot \cdot \cdot (5)$$

The symbol s is a parameter dependent on time, and it increases with time. A weighting coefficient $A(s)$ of the first term on the right-hand side is a decreasing function of s. A weighting coefficient of the objective term is $B(s)$. A weighting coefficient $C(s)$ of the constraint term is a function different from $B(s)$. For example, $B(s)$ is s, and $C(s)$ is $s^2$. The arithmetic apparatus 100 changes the quantum fluctuations to be applied to the quantum bits, the interactions between the quantum bits, and the local field according to Expression (5).

The control unit 101 generates a control signal for controlling a weighting coefficient of the constraint term. The control unit 101 changes a weighting coefficient of the constraint term so that the weighting coefficient of the constraint term changes differently from a weighting coefficient of the objective term. The arithmetic apparatus 100 performs quantum annealing according to the signal generated by the control unit 101.

The arithmetic apparatus 100 according to this example embodiment is able to adjust the degree of effects of the objective term and the constraint term in the process of reducing quantum fluctuations. Thus, the arithmetic apparatus 100 makes an adjustment to increase the energy difference in quantum annealing and thereby reduces the required computation time.

<Second Example Embodiment>

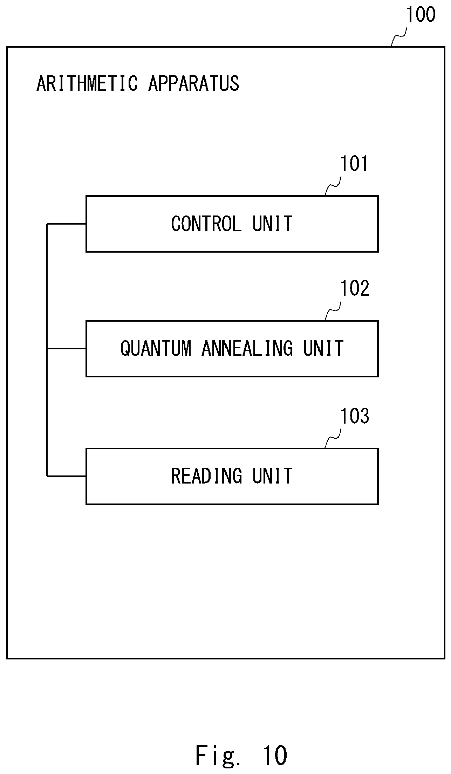

Fig. 10 is a block diagram showing a configuration of an arithmetic apparatus 100 according to a second example embodiment. The arithmetic apparatus 100 includes a control unit 101, a quantum annealing unit 102, and a reading unit 103.

The arithmetic apparatus 100 searches for a solution of a combinatorial optimization problem by using the Hamiltonian composed of a quantum fluctuation term, an objective term, and a constraint term. The objective term and the constraint term are parts that represent the combinatorial optimization problem. In this example embodiment, the Hamiltonian is represented by Expression (6).

[Expression 6]

$$H = -(1 - s)[\text{quantum fluctuation term}]$$

$$- (s[\text{objective term}] + C(s)[\text{constraint term}]) \cdot \cdot \cdot (6)$$

The symbol s is a parameter dependent on time, and it increases with time. The start point of quantum annealing corresponds to s=0, and the end point of quantum annealing corresponds to s=1. $C(s)$ may be a function where $C(0)=0$ and $C(1)=1$ are satisfied.

In Expression (6), a weighting coefficient of the quantum fluctuation term is (1-s). A weighting coefficient of the objective term is s, and a weighting coefficient of the constraint term is $C(s)$. $C(s)$ is a function different from $B(s)=s$.

When the LHZ model is used, the Hamiltonian is represented by Expression (7). K is the number of physical bits, and K=N(N-1)/2 is established by using the number N of logical bits. L is the number of constraints, and it is represented as L=(N-1)(N-2)/2.
[Expression 7]

$$H(s) = -(1-s)\sum_k^K \sigma_k^x + (-s\sum_k^K J_k \sigma_k^z - C(s)\sum_l^L \sigma_{(l,n)}^z \sigma_{(l,s)}^z \sigma_{(l,e)}^z \sigma_{(l,w)}^z) \cdot\cdot\cdot (7)$$

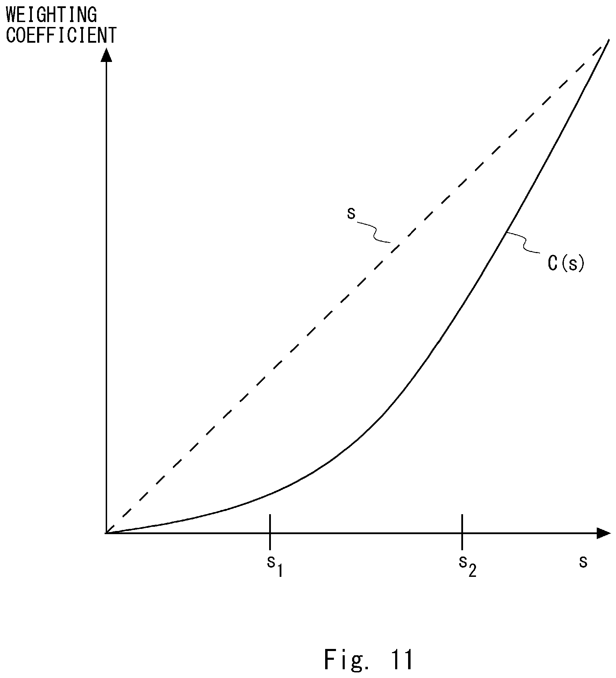

Fig. 11 is a view showing the relationship between s, which is the weighting coefficient of the objective term, and C(s), which is the weighting coefficient of the constraint term. The horizontal axis indicates s, and the vertical axis indicates the weighting coefficient. At the start of quantum fluctuations, s=0. At the end of quantum fluctuations, s=1. In the process of quantum fluctuations, the weighting coefficient s of the objective term and the weighting coefficient C(s) of the constraint term both increase. At the end of quantum fluctuations, s and C(s) may have the same value. In Fig. 11, the weight C(s) of the constraint term slowly increases at the early stage of annealing, and rapidly increases at the final stage of annealing.

In Fig 11, there is a time interval during which C(s) falls below the weighting coefficient s of the objective term. The period during which C(s) falls below s may be a predetermined interval of quantum annealing, and it may be the early stage of quantum annealing. The early stage is a range from s=0 to $s_1$ at specified timing. The weighting coefficient C(s) of the constraint term may change so that the amount of increase is small at the early stage of quantum annealing and the amount of increase is large at the final stage of quantum annealing. The final stage is a range from $s_2$ at specified timing to s=1. $s_1$ and $s_2$ are arbitrary values that satisfy $0<s_1$ and $s_2<1$ and also satisfy $s_1<s_2$. Further, C(s) may be s to the power of a value different from 1. C(s) is $s^2$, for example.

The control unit 101 inputs control signals to the quantum annealing unit 102. There may be a plurality of types of control signals. The control signals at least include a first control signal for controlling the weight (C(s)) of the constraint term in Expression (6), a second control signal for controlling the weight (s) of the objective term in Expression (6), and a third control signal for controlling the weight (1-s) of the quantum fluctuation term in Expression (6).

The control unit 101 may be a semiconductor device at room temperature or a superconducting circuit cooled to very low temperature of several mK (milli-Kelvin) to several K.

The quantum annealing unit 102 is a hardware implementation of the Ising model to which a specified combinatorial optimization problem is mapped. The quantum annealing unit 102 is a circuit where a plurality of quantum bit circuits are coupled to one another.

The quantum annealing unit 102 is implemented by a superconducting circuit using a superconducting material, for example. In the case where the quantum annealing unit 102 is implemented by a superconducting circuit, the quantum annealing unit 102 is cooled to very low temperature of several mK and operates. The quantum annealing unit 102 is cooled with use of a dilution refrigerator, for example.

The reading unit 103 reads the state of the quantum annealing unit 102. To be specific, the reading unit 103 reads the state of the plurality of quantum bit circuits that constitute the quantum annealing unit 102.

The reading unit 103 may be a semiconductor device at room temperature or a superconducting circuit cooled to very low temperature of several mK to several K.

The operation of the arithmetic apparatus 100 is described hereinafter. The control unit 101 changes the level of the third control signal so that the weight of the quantum fluctuation term gradually decreases as quantum annealing proceeds, and generates the first and second control signals so as to increase the weighting coefficient of the constraint term and the weighting coefficient of the objective term. The control unit 101 may change the levels of the first and second control signals so that the weight of the constraint term is smaller than the weight of the objective term at the early stage of quantum annealing, and the weight of the objective term and the weight of the constraint term are the same at the end of quantum annealing.

Then, the reading unit 103 reads the state of each quantum bit circuit of the quantum annealing unit 102 at the end of quantum annealing. This allows finding the state of each spin in the ground state (the state where the energy is minimum) of the Ising model. In other words, this allows finding an optimal solution of a specified combinatorial optimization problem mapped to the Ising model. An optimal solution of a desired combinatorial optimization problem is thereby obtained.

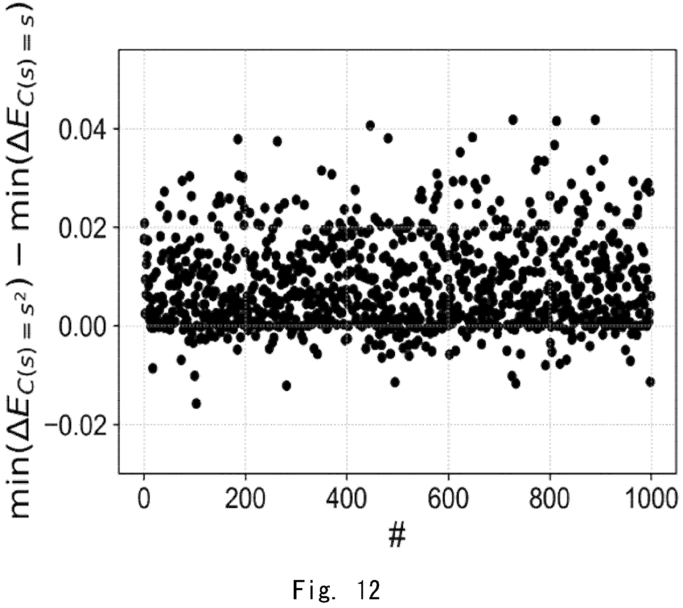

Fig. 12 is a view showing the effect of this example embodiment on a randomly generated combinatorial optimization problem. In the LHZ model, 1000 random patterns of combinatorial optimization problems were generated, and computation time when the weighting coefficient C(s) of the constraint term is s and when it is $s^2$ was evaluated.

For the evaluation of computation time, the minimum value of a difference between the energy of an optimal solution and the energy of a solution close to the optimal in the process of quantum annealing was used.

The vertical axis indicates a difference between an energy difference ΔE1 when the weighting coefficient of the constraint term C(s)=$s^2$ and an energy difference ΔE2 when C(s)=s. Since ΔE1 is greater in the area where the vertical axis is positive, necessary computation time is short, which shows that this example embodiment was effective. C(s)=$s^2$ was effective in about 85% of the 1000 randomly generated combinatorial optimization problems, and C(s)=s was effective in about 15% of them. Therefore, with use of this example embodiment, the efficiency is expected to be improved for about 85% of problems.

When there are a plurality of constraint terms, an appropriate weighting coefficient may be assigned to each of the constraint terms. In this case, the Hamiltonian using the LHZ model is represented by Expression (8).
[Expression 8]

$$H(s) = -(1-s)\sum_{k}^{K}\sigma_{k}^{x} + \left(-s\sum_{i}^{K}J_{k}\sigma_{k}^{z} - \sum_{l}^{L}C_{l}(s)\sigma_{(l,n)}^{z}\sigma_{(l,s)}^{z}\sigma_{(l,e)}^{z}\sigma_{(l,w)}^{z}\right) \cdot \cdot \cdot (8)$$

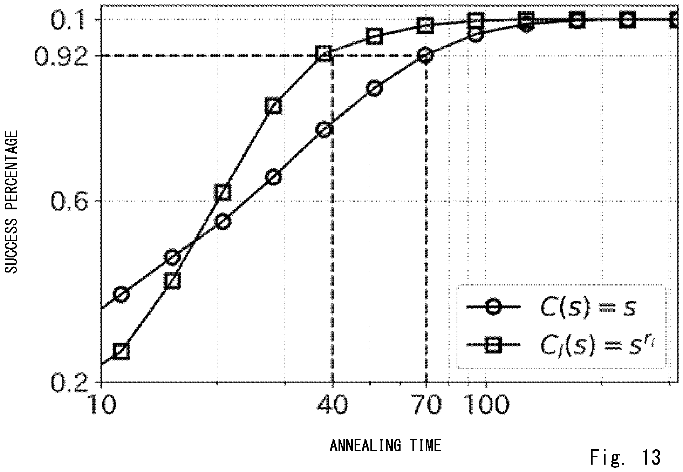

Fig. 13 is a semilogarithmic graph representing a success percentage in the case where a weighting coefficient is set for each constraint term in an example of a randomly generated problem. The horizontal axis indicates annealing time. The vertical axis indicates a success percentage. The success percentage is a percentage of obtaining the ground state as a result of quantum annealing.
According to Fig. 13, when the weighting coefficients of all constraint terms are C(s)=s, the annealing time that is necessary for the success percentage to reach about 92% is 70. On the other hand, when an appropriate weighting coefficient $C_1(s)=s^{r-1}$ is selected for each constraint term, the annealing time that is necessary for the success percentage to reach about 92% is 40. Thus, this example embodiment allows the reduction of the annealing time that is necessary for computation. Specifically, when there are a plurality of constraint terms, the efficiency is increased by giving an appropriate weighting coefficient to each constraint term.
Next, the time required for computation is estimated for an example of the case where the Hamiltonian is represented by Expression (9) in this example embodiment. Note that a solution is the state where all spins point the same direction, which is trivial.
[Expression 9]

$$H(s) = -(1-s)\sum_{k}^{K}\sigma_{k}^{x} + \left(-\frac{s}{2}\sum_{i}^{K}\sigma_{k}^{z} - C(s)\sum_{l}^{L}\sigma_{(l,n)}^{z}\sigma_{(l,s)}^{z}\sigma_{(l,e)}^{z}\sigma_{(l,w)}^{z}\right) \cdot \cdot \cdot (9)$$

In Expression (9), K is the number of physical bits, and K=N(N-1)/2 is established with use of the number N of logical bits. l is a parameter representing a constraint. L is the number of constraints, and it is represented as L=(N-1)(N-2)/2.

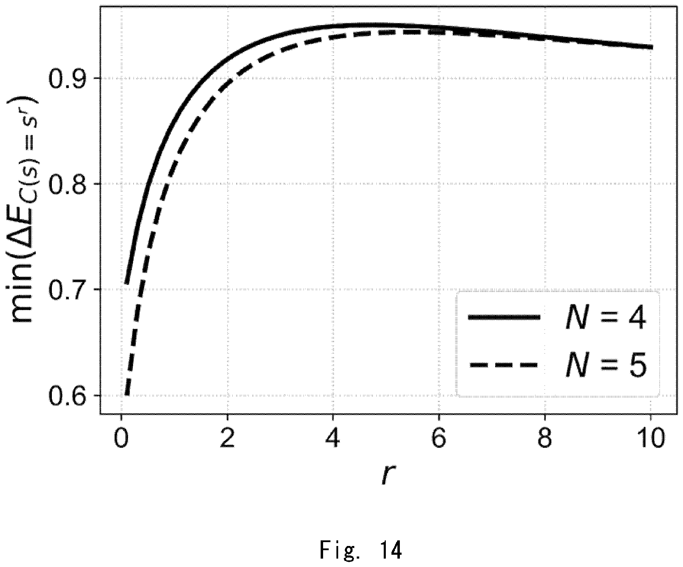

Fig. 14 shows a result of calculating an energy difference with a different power r when $C(s)=s^r$ in Expression (9). Computation is carried out for the case where the number of logical bits is N=4 and where N=5. The vertical axis is an energy difference $min(\Delta E_{C(s)=s^r})$ between an optimal solution and a solution close to the optimal. The horizontal axis is the power r of $C(s)=s^r$. Since the energy difference increases with an increase of r, reduction of computation time is achieved.
A result of theory verification using the model represented by Expression (10) is described hereinbelow. When p=4 in Expression (10), a model with a constraint term involving many-body interactions is formed just like the LHZ model. Note that an optimal solution of Expression (10) is trivial just like Expression (9), and it is the state where all spins point the same direction.
[Expression 10]

$$H = -(1-s)\sum_{i=1}^{N}\sigma_{i}^{x} + \left[-\frac{s}{2}\sum_{i=1}^{N}\sigma_{i}^{z} - C(s)N\left(\frac{1}{N}\sum_{i=1}^{N}\sigma_{i}^{z}\right)^{p}\right] \cdot \cdot \cdot (10)$$

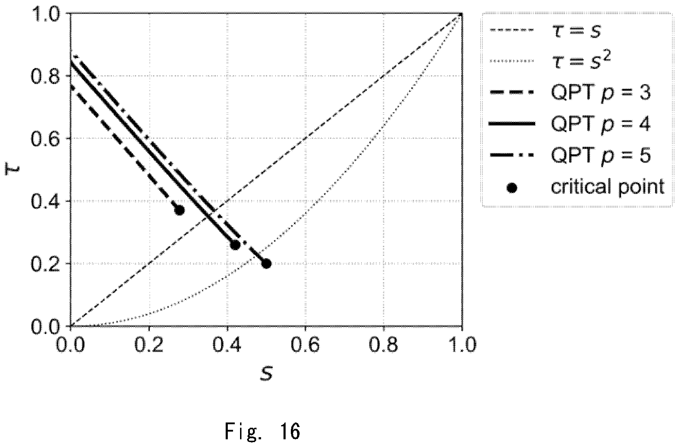

It is known that when C(s)=s, the energy difference decreases exponentially relative to the number of quantum bits in the model represented by Expression (10). Thus, the combinatorial optimization problem represented by Expression (10) is a difficult problem for quantum annealing. It is difficult because as the size (quantum bits) of the problem increases, the time required for obtaining an optimal solution increases exponentially. The symbol p in Expression (10) represents the severity of a constraint of the constraint term, and it is unable to overcome the difficulty regardless of any schemes if p approaches infinity.

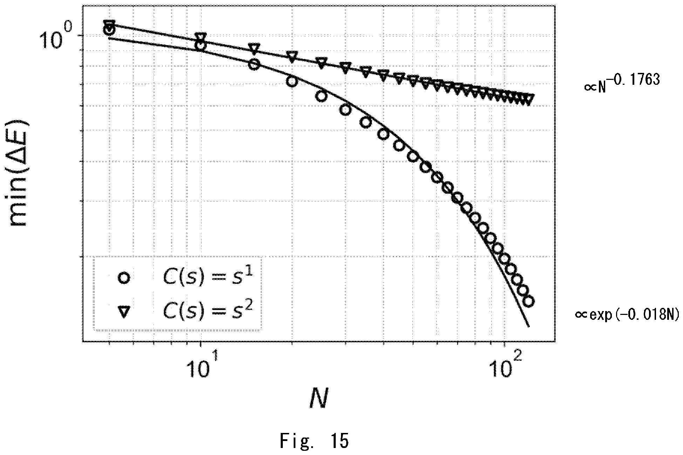

Fig. 15 is a graph showing time required for computation when the number N of quantum bits increases in Expression (10). The horizontal axis indicates the number N of quantum bits. The vertical axis indicates an energy difference $min(\Delta E)$ between the energy of an optimal solution and the energy of a solution close to the optimal. It is known that time $t_0$ required for quantum annealing is proportional to $min(\Delta E)^{-2}$.
Fig. 15 shows that when $C(s)=s^2$, the energy difference changes as a power function of the number N of quantum bits. On the other hand, when C(s)=s, the energy difference decreases as an exponential function. Thus, while the time required for obtaining an optimal solution increases as an exponential function in the related art, the required computation time increases as a power function, which is slower, in this example embodiment.
A method of setting C(s) is described theoretically using the model of Expression (10). Fig. 16 shows a result of calculating a phase diagram at absolute zero by using a statistical physics prescription. The horizontal axis is a parameter s for adjusting a weight, and the vertical axis is C(s)=τ. The lines running from the upper left to the lower right are first order phase transition lines (QPT). The first order phase transition lines when p=3, p=4, and p=5 in Expression (10) are shown. The end point (critical point) of the first order phase transition line is a critical point. The position of each critical point can be exactly calculated.

In Fig. 16, each of the graphs of τ=s and τ=s² is the locus when a weighting coefficient τ(C(s)) of the constraint term is a function of s in quantum annealing, which indicates an annealing route. s=τ=0 (lower left of the graph) represents the start point of annealing, and s=τ=1 (upper right of the graph) represents the end point of annealing.

It is known that use of the annealing route intersecting with the first order phase transition line causes the time required for quantum annealing to increase exponentially. The first order phase transition line at p=4 intersects with the annealing route of C(s)=s and does not intersect with the annealing route of C(s)= s². Compared with Fig. 15, in the case of C(s)=s, the energy difference decreases as an exponential function, and the required computation time increases as an exponential function. On the other hand, in the case of C(s)= s², the energy difference decreases as a power function, and the required time does not increase as an exponential function. Therefore, when setting C(s) in this example embodiment, it is preferred to select C(s) that avoids the first order phase transition line (QPT). Note that the difficulty is reduced to a certain degree when it intersects with the first order phase transition line near the critical point. Specifically, although the required time increases exponentially, the degree of increase (the coefficient of the exponent) can be changed.

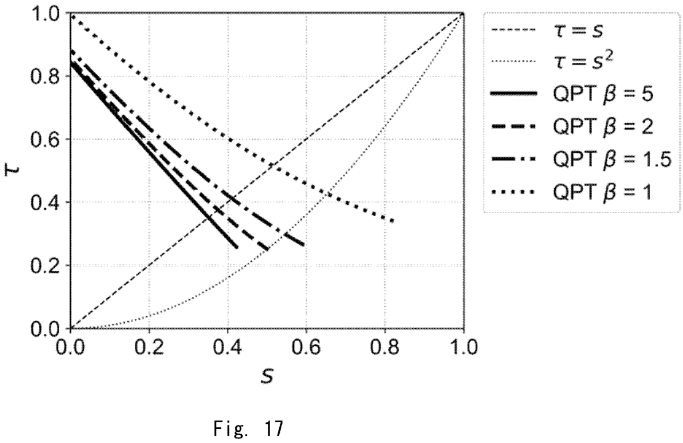

Fig. 17 shows a result of calculating a phase diagram at finite temperature (temperature that is not absolute zero). The horizontal axis is s, and the vertical axis is C(s)=τ. Fig. 17 shows the first order phase transition lines for inverse temperature β=1, 1.5, 2, 5 when p=4 in Expression (10). The inverse temperature β is β ∝ {1/(temperature)}. Thus, the temperature is higher as β is smaller, and the temperature is lower as β is larger. Each of τ=s and τ=s² is the locus of the annealing route.

As shown in Fig. 17, as the temperature is higher and the inverse temperature is lower, the first order phase transition line is longer. In this case also, the locus of C(s)=s² does not intersect with the first order phase transition line of β=5, and the computation time does not increase exponentially. Further, even if the temperature increases to a certain degree, the first order phase transition line can be avoided by setting C(s)=s³ and s⁴. Thus, this example embodiment is effective not only at absolute zero but also at finite temperature.

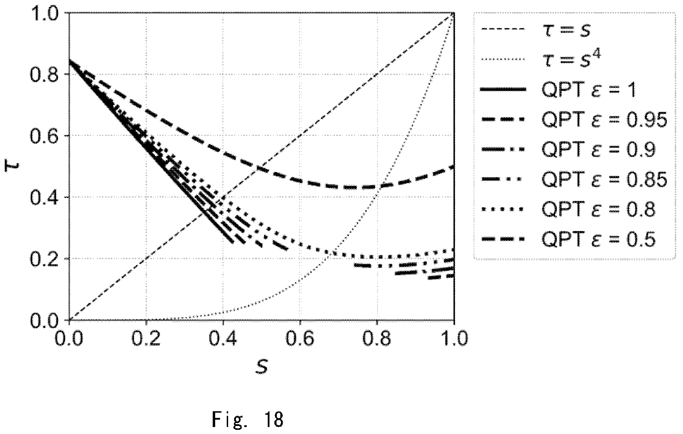

The case where the Hamiltonianis represented by a random magnetic field (binary distribution) is studied below. When p=4 in Expression (11), a phase diagram is calculated for the model where $J_i$ is given by Expression (12). Fig. 18 shows a result of calculating the first order phase transition line (QPT) for six cases of ε=1, 0.95, 0.9, 0.85, 0.8, 0.5. τ=s and τ=s⁴ indicate annealing routes.

[Expression 11]

$$H = -(1-s)\sum_{i=1}^{N}\sigma_i^x + \left[-s\sum_{i=1}^{N}J_i\sigma_i^z - C(s)N\left(\frac{1}{N}\sum_{i=1}^{N}\sigma_i^z\right)^p\right] \cdot \cdot \cdot (11)$$

[Expression 12]

$$J_i = \begin{cases} +\frac{1}{2} \cdots N\epsilon \text{ number of bits} \\ -\frac{1}{2} \cdots N(1-\epsilon) \text{ number of bits} \end{cases} \cdot \cdot \cdot (12)$$

In Fig. 18, the phase transition line is divided into two parts at ε=0.85, 0.9, 0.95. In this case also, by setting τ=s⁴, the annealing route can be set to avoid intersection with the phase transition line when ε=0.85, 0.9, 0.95, which allows reducing the computation time.

In Fig. 18, even when τ=s⁴, the first order phase transition line at ε=0.8 and the annealing route intersect with each other, and therefore the computation time increases exponentially with an increase in quantum bits. However, it is known that there are effects caused by a change in the coefficient of the exponential function, which is described below.

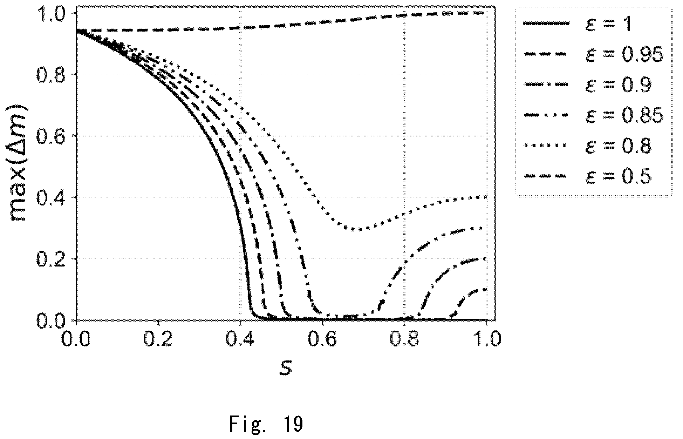

Fig. 19 shows a result of calculating the maximum width of change of magnetization. The vertical axis is the maximum width of change of magnetization, and the horizontal axis is s. The maximum width of change of magnetization represents the strength of phase transition. It is known that, at a point of intersection between the annealing route and the first order phase transition line, the required computation time is shorter as the strength of phase transition is smaller. Further, in Fig. 18, the annealing route at τ=s intersects with the first order phase transition line at ε=0.8 when s=0.4. At this time, the strength of phase transition in Fig. 19 is about 0.7. On the other hand, in Fig. 18, the annealing route at τ=s⁴ intersects with the first order phase transition line at ε=0.8 when s=0.7. At this time, the strength of phase transition in Fig. 19 is about 0.3. Thus, use of this example embodiment allows reducing the strength of phase transition and thereby shortening the required computation time.

<Hardware Configuration Example>

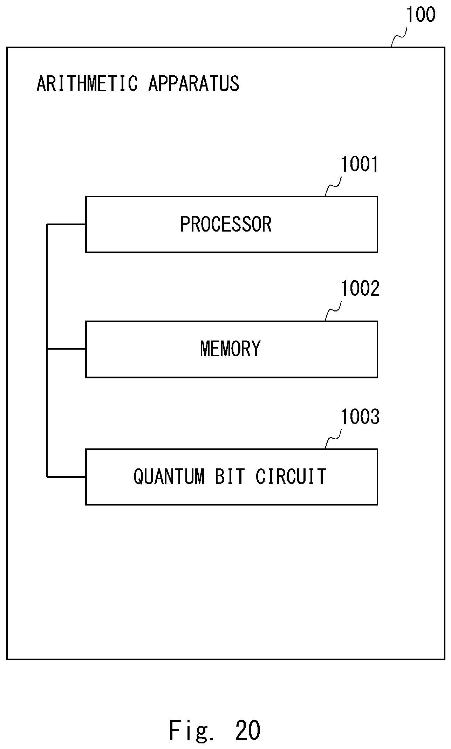

Fig. 20 is a diagram illustrating a hardware configuration for implementing the arithmetic apparatus 100. The arithmetic apparatus 100 includes a processor 1001, a memory 1002, and a quantum bit circuit 1003. The processor 1001 may be various kinds of processors such as a Central Processing Unit (CPU), a Graphics Processing Unit (GPU), or a Field-Programmable Gate Array (FPGA). The processor may be a semiconductor device installed at room temperature or may be a superconductive circuit cooled down to an extremely low temperature from about several mK to about several K. The control unit 101 in the first example embodiment and the second example embodiment may be implemented by the processor 1001 loading the program stored in the memory 1002 and executing the loaded program. The quantum bit circuit 1003 controls the quantum fluctuations of the quantum bit circuit, the strength of the coupling between the quantum bits, and the magnetic field during quantum annealing. The quantum annealing unit in the second example embodiment is implemented by the quantum bit circuit 1003. Regarding the reading unit 103 in the second example embodiment, the processor 1001 may read the state of quantum bits of the quantum bit circuit 1003 and store it into the memory 1002.
The above-described program can be stored and provided to a computer using any type of non-transitory computer readable medium. Non-transitory computer readable media include any type of tangible storage medium. Examples of the non-transitory computer readable medium include a magnetic storage medium, an optical magnetic storage medium, a CD-ROM (Read Only Memory), a CD-R, a CD-R/W, and a semiconductor memory. Examples of the magnetic storage medium include a flexible disk, a magnetic tape, and a hard disk drive. Examples of the optical magnetic storage medium include a magnetooptical disk. Examples of the semiconductor memory include a mask ROM, a PROM (Programmable ROM), an EPROM (Erasable PROM), a flash ROM, and a RAM (Random Access Memory). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or an optical fiber, or a wireless communication line.

**Reference Signs List**

| | |
|---|---|
| 100 | ARITHMETIC APPARATUS |
| 101 | CONTROL UNIT |
| 102 | QUANTUM ANNEALING UNIT |
| 103 | READING UNIT |
| 1001 | PROCESSOR |
| 1002 | MEMORY |
| 1003 | QUANTUM BIT CIRCUIT |
| a1 - a6, c12 - c56 | QUANTUM BITS |
| b12 - b56 | COUPLING |
| d1 - d10 | INTERACTION |

**Claims**

1.   An arithmetic apparatus (100) comprising:

   quantum bit circuits composed of a plurality of physical quantum bits;
   a control means (101) for changing a first weighting coefficient assigned to a constraint term included in Hamiltonian so that the first weighting coefficient changes differently from a second weighting coefficient assigned to an objective term included in the Hamiltonian in process of reducing quantum fluctuations to obtain a ground state of the Hamiltonian used for solving a combinatorial optimization problem, wherein
   the control means (101) is configured to change the first weighting coefficient so that the first weighting coefficient does not exceed the second weighting coefficient in a predetermined period included in the process of reducing quantum fluctuations, and a locus of the first weighting coefficient does not intersect with a first order phase transition line when the first weighting coefficient is represented as a function with a variable being the second weighting coefficient,
   the control means (101) is configured to generate a first control signal for changing the first weighting coefficient, a second control signal for changing the second weighting coefficient, and a third control signal for changing a third weighting coefficient used for reducing the quantum fluctuations,
the arithmetic apparatus (100) further comprises a quantum annealing circuit (102) configured to apply quantum fluctuations to the plurality of physical quantum bits and change strength of interactions between the physical quantum bits on the basis of the first to third control signals,
the Hamiltonian represents the combinatorial optimization problem as a sum of the constraint term and the optimization term, and
the constraint term represents a constraint condition that is imposed between the plurality of physical quantum bits and the objective term is different from the constraint term.

2. The arithmetic apparatus (100) according to Claim 1, wherein the control means (101) is configured to change the first weighting coefficient so that the first weighting coefficient does not exceed the second weighting coefficient at an early stage of the process of reducing quantum fluctuations, wherein

   the early stage begins at the start of the process of reducing quantum fluctuations, and
   the early stage ends at an arbitrary timing before the end of the process of reducing quantum fluctuations.

3. The arithmetic apparatus (100) according to Claim 1 or 2, wherein the control means (101) is configured to change the first weighting coefficient so that the first weighting coefficient does not exceed the second weighting coefficient in the process of reducing quantum fluctuations, and to change the first weighting coefficient so that the first weighting coefficient is the same as the second weighting coefficient at an end of the process of reducing quantum fluctuations.

4. The arithmetic apparatus (100) according to any one of Claims 1 to 3, wherein the control means (101) is configured to change the first weighting coefficient so that the first weighting coefficient is the second weighting coefficient to a power of a value different from 1.

5. The arithmetic apparatus (100) according to any one of Claims 1 to 4, wherein the constraint term involves three or more many-body interactions.

6. The arithmetic apparatus (100) according to Claim 1, further comprising:
   a reading means (103) for reading states of the physical quantum bits.

7. An arithmetic method executed by an arithmetic apparatus (100) comprising quantum bit circuits composed of a plurality of physical quantum bits, a control means (101), and a quantum annealing circuit (102), the arithmetic method comprising:

   changing, using the control means (101),
   a first weighting coefficient assigned to a constraint term included in Hamiltonian so that the first weighting coefficient changes differently from a second weighting coefficient assigned to an objective term included in the Hamiltonian in process of reducing quantum fluctuations to obtain a ground state of the Hamiltonian used for solving a combinatorial optimization problem, wherein
   the first weighting coefficient is changed, using the control means (101), so that the first weighting coefficient does not exceed the second weighting coefficient in a predetermined period included in the process of reducing quantum fluctuations, and a locus of the first weighting coefficient does not intersect with a first order phase transition line when the first weighting coefficient is represented as a function with a variable being the second weighting coefficient,
   quantum fluctuations are applied to a plurality of physical quantum bits and strength of interactions between the physical quantum bits are changed, using the quantum annealing circuit (102), on the basis of a first control signal for changing the first weighting coefficient, a second control signal for changing the second weighting coefficient, and a third control signal for changing a third weighting coefficient used for reducing the quantum fluctuations,
   the Hamiltonian represents the combinatorial optimization problem as a sum of the constraint term and the optimization term, and
   the constraint term represents a constraint condition that is imposed between the plurality of physical quantum bits and the objective term is different from the constraint term.

8. A computer program comprising instructions which, when the program is executed by a an arithmetic apparatus (100) comprising quantum bit circuits composed of a plurality of physical quantum bits, a control means (101), and a quantum annealing circuit (102), cause the arithmetic apparatus (100) to carry out the method of claim 7.

**Patentansprüche**

1. Rechenvorrichtung (100), mit:

   Quantenbit-Schaltungen, die aus einer Vielzahl von physikalischen Quantenbits bestehen;
   einer Steuereinrichtung (101) zum Ändern eines ersten Gewichtungskoeffizienten, der einem in einer Hamiltonfunktion enthaltenen Zwangsbedingungsterm zugeordnet ist, so dass sich der erste Gewichtungskoeffizient anders ändert als ein zweiter Gewichtungskoeffizient, der einem in der Hamiltonfunktion enthaltenen Zielterm zugeordnet ist, in einem Prozess zum Reduzieren von Quantenfluktuationen zum Erhalten eines Grundzustands der Hamiltonfunktion, die zum Lösen eines kombinatorischen Optimierungsproblems verwendet wird, wobei die Steuereinrichtung (101) dafür konfiguriert ist, den ersten Gewichtungskoeffizienten derart zu ändern, dass der erste Gewichtungskoeffizient den zweiten Gewichtungskoeffizienten in einer vorgegebenen Zeitdauer, die im Prozess zum Reduzieren von Quantenfluktuationen enthalten ist, nicht überschreitet, und eine Ortskurve des ersten Gewichtungskoeffizienten eine Linie eines Phasenübergangs erster Ordnung nicht kreuzt, wenn der erste Gewichtungskoeffizient als eine Funktion mit dem zweiten Gewichtungskoeffizienten als Variable dargestellt wird,
   wobei die Steuereinrichtung (101) dafür konfiguriert ist, ein erstes Steuersignal zum Ändern des ersten Gewichtungskoeffizienten, ein zweites Steuersignal zum Ändern des zweiten Gewichtungskoeffizienten und ein drittes Steuersignal zum Ändern eines dritten Gewichtungskoeffizienten zu erzeugen, der zum Reduzieren der Quantenfluktuationen verwendet wird,
   wobei die Rechenvorrichtung (100) ferner eine Quanten-Annealing-Schaltung (102) aufweist, die dafür konfiguriert ist, Quantenfluktuationen auf die Vielzahl von physikalischen Quantenbits anzuwenden und die Stärke von Wechselwirkungen zwischen den physikalischen Quantenbits basierend auf dem ersten bis dritten Steuersignal zu ändern,
   wobei die Hamiltonfunktion das kombinatorische Optimierungsproblem als eine Summe aus dem Zwangsbedingungsterm und dem Optimierungsterm darstellt, und
   der Zwangsbedingungsterm eine Zwangsbedingung darstellt, die zwischen der Vielzahl von physikalischen Quantenbits auferlegt ist, und wobei der Zielterm vom Zwangsbedingungsterm verschieden ist.

2. Rechenvorrichtung (100) nach Anspruch 1, wobei die Steuereinrichtung (101) dafür konfiguriert ist, den ersten Gewichtungskoeffizienten derart zu ändern, dass der erste Gewichtungskoeffizient den zweiten Gewichtungskoeffizienten in einer frühen Phase des Prozesses zum Reduzieren von Quantenfluktuationen nicht überschreitet, wobei

   die frühe Phase zu Beginn des Prozesses zum Reduzieren von Quantenfluktuationen beginnt, und
   die frühe Phase zu einem beliebigen Zeitpunkt vor dem Ende des Prozesses zum Reduzieren von Quantenfluktuationen endet.

3. Rechenvorrichtung (100) nach Anspruch 1 oder 2, wobei die Steuereinrichtung (101) dafür konfiguriert ist, den ersten Gewichtungskoeffizienten derart zu ändern, dass der erste Gewichtungskoeffizient den zweiten Gewichtungskoeffizienten während des Prozesses zum Reduzieren von Quantenfluktuationen nicht überschreitet, und den ersten Gewichtungskoeffizienten derart zu ändern, dass der erste Gewichtungskoeffizient am Ende des Prozesses zum Reduzieren von Quantenfluktuationen dem zweiten Gewichtungskoeffizienten gleicht.

4. Rechenvorrichtung (100) nach einem der Ansprüche 1 bis 3, wobei die Steuereinrichtung (101) dafür konfiguriert ist, den ersten Gewichtungskoeffizienten derart zu ändern, dass der erste Gewichtungskoeffizient dem zweiten Gewichtungskoeffizienten, potenziert einem von 1 verschiedenen Wert, entspricht.

5. Rechenvorrichtung (100) nach einem der Ansprüche 1 bis 4, wobei der Zwangsbedingungsterm drei oder mehr Vielteilchenwechselwirkungen beinhaltet.

6. Rechenvorrichtung (100) nach Anspruch 1, ferner mit einer Leseeinrichtung (103) zum Lesen von Zuständen der physikalischen Quantenbits.

7. Rechenverfahren, das durch eine Rechenvorrichtung (100) ausgeführt wird, die Quantenbit-Schaltungen, die aus einer Vielzahl von physikalischen Quantenbits bestehen, eine Steuereinrichtung (101) und eine Quanten-Annealing-Schaltung (102) aufweist, wobei das Rechenverfahren aufweist:

   Ändern eines ersten Gewichtungskoeffizienten, der einem in einer Hamiltonfunktion enthaltenen Zwangsbedingungsterm zugewiesen ist, unter Verwendung der Steuereinrichtung (101), so dass sich der erste Gewichtungskoeffizient anders ändert als ein zweiter Gewichtungskoeffizient, der einem in der Hamiltonfunktion enthaltenen Zielterm zugewiesen ist, während eines Prozesses zum Reduzieren von Quantenfluktuationen zum Erhalten eines Grundzustands der Hamiltonfunktion, die zum Lösen eines kombinatorischen Optimierungsproblems verwendet wird,

wobei der erste Gewichtungskoeffizient unter Verwendung der Steuereinrichtung (101) derart geändert wird, dass der erste Gewichtungskoeffizient den zweiten Gewichtungskoeffizienten in einem vorgegebenen Zeitraum, der im Prozess zum Reduzieren von Quantenfluktuationen enthalten ist, nicht überschreitet, und eine Ortskurve des ersten Gewichtungskoeffizienten eine Linie eines Phaseübergangs erster Ordnung nicht kreuzt, wenn der erste Gewichtungskoeffizient als eine Funktion mit dem zweiten Gewichtungskoeffizienten als Variable dargestellt wird,

wobei Quantenfluktuationen auf eine Vielzahl von physikalischen Quantenbits angewendet werden und die Stärke von Wechselwirkungen zwischen den physikalischen Quantenbits unter Verwendung der Quanten-Annealing-Schaltung (102) basierend auf einem ersten Steuersignal zum Ändern des ersten Gewichtungskoeffizienten, einem zweiten Steuersignal zum Ändern des zweiten Gewichtungskoeffizienten und einem dritten Steuersignal zum Ändern eines dritten Gewichtungskoeffizienten angewendet werden, der zum Reduzieren der Quantenfluktuationen verwendet wird,

wobei die Hamiltonfunktion das kombinatorische Optimierungsproblem als Summe aus dem Zwangsbedingungsterm und dem Optimierungsterm darstellt, und

der Zwangsbedingungsterm eine Zwangsbedingung darstellt, die zwischen der Vielzahl von physikalischen Quantenbits auferlegt wird, und der Zielterm vom Zwangsbedingungsterm verschieden ist.

**8.** Computerprogramm, das Anweisungen enthält, die, wenn das Programm durch eine Rechenvorrichtung (100) ausgeführt wird, die Quantenbit-Schaltungen, die aus einer Vielzahl von physikalischen Quantenbits bestehen, sowie eine Steuereinrichtung (101) und eine Quanten-Annealing-Schaltung (102) aufweist, bewirken, dass die Rechenvorrichtung (100) das Verfahren nach Anspruch 7 ausführt.

**Revendications**

**1.** Appareil arithmétique (100) comprenant :

des circuits de bits quantiques composés d'une pluralité de bits quantiques physiques ;
un moyen de commande (101) pour modifier un premier coefficient de pondération attribué à un terme contrainte inclus dans un Hamiltonien de telle sorte que le premier coefficient de pondération varie différemment d'un deuxième coefficient de pondération attribué à un terme objectif inclus dans le Hamiltonien dans le processus de réduction de fluctuations quantiques pour obtenir un état fondamental du Hamiltonien utilisé pour résoudre un problème d'optimisation combinatoire, dans lequel

le moyen de commande (101) est configuré pour modifier le premier coefficient de pondération de telle sorte que le premier coefficient de pondération ne dépasse pas le deuxième coefficient de pondération dans une période prédéterminée incluse dans le processus de réduction de fluctuations quantiques, et un locus du premier coefficient de pondération ne croise pas une ligne de transition de phase de premier ordre lorsque le premier coefficient de pondération est représenté en tant que fonction avec une variable étant le deuxième coefficient de pondération,

le moyen de commande (101) est configuré pour générer un premier signal de commande pour modifier le premier coefficient de pondération, un deuxième signal de commande pour modifier le deuxième coefficient de pondération, et un troisième signal de commande pour modifier un troisième coefficient de pondération utilisés pour réduire les fluctuations quantiques,

l'appareil arithmétique (100) comprend en outre un circuit de recuit quantique (102) configuré pour appliquer des fluctuations quantiques à la pluralité de bits quantiques physiques et modifier la force des interactions entre les bits quantiques physiques sur la base des premier à troisième signaux de commande,

le Hamiltonien représente le problème d'optimisation combinatoire comme une somme du terme contrainte et du terme d'optimisation, et

le terme contrainte représente une condition de contrainte qui est imposée entre la pluralité de bits quantiques physiques et le terme objectif est différent du terme contrainte.

**2.** Appareil arithmétique (100) selon la revendication 1, dans lequel le moyen de commande (101) est configuré pour modifier le premier coefficient de pondération de telle sorte que le premier coefficient de pondération ne dépasse pas le deuxième coefficient de pondération à une phase précoce du processus de réduction de fluctuations quantiques, dans lequel

la phase précoce commence au début du processus de réduction de fluctuations quantiques, et
la phase précoce se termine à un moment arbitraire avant la fin du processus de réduction de fluctuations quantiques.

3. Appareil arithmétique (100) selon la revendication 1 ou 2, dans lequel le moyen de commande (101) est configuré pour modifier le premier coefficient de pondération de telle sorte que le premier coefficient de pondération ne dépasse pas le deuxième coefficient de pondération dans le processus de réduction de fluctuations quantiques, et pour modifier le premier coefficient de pondération de telle sorte que le premier coefficient de pondération soit le même que le deuxième coefficient de pondération à une fin du processus de réduction de fluctuations quantiques.

4. Appareil arithmétique (100) selon l'une quelconque des revendications 1 à 3, dans lequel le moyen de commande (101) est configuré pour modifier le premier coefficient de pondération de telle sorte que le premier coefficient de pondération soit le deuxième coefficient de pondération à une puissance d'une valeur différente de 1.

5. Appareil arithmétique (100) selon l'une quelconque des revendications 1 à 4, dans lequel le terme contrainte implique des interactions à trois corps ou plus.

6. Appareil arithmétique (100) selon la revendication 1, comprenant en outre :
un moyen de lecture (103) pour lire des états des bits quantiques physiques.

7. Procédé arithmétique exécuté par un appareil arithmétique (100) comprenant des circuits de bits quantiques composés d'une pluralité de bits quantiques physiques, d'un moyen de commande (101) et d'un circuit de recuit quantique (102), le procédé arithmétique comprenant :

la modification, à l'aide du moyen de commande (101),
d'un premier coefficient de pondération attribué à un terme contrainte inclus dans le Hamiltonien de telle sorte que le premier coefficient de pondération varie différemment d'un deuxième coefficient de pondération attribué à un terme objectif inclus dans le Hamiltonien dans le processus de réduction de fluctuations quantiques pour obtenir un état fondamental du Hamiltonien utilisé pour résoudre un problème d'optimisation combinatoire, dans lequel le premier coefficient de pondération est modifié, à l'aide du moyen de commande (101), de telle sorte que le premier coefficient de pondération ne dépasse pas le deuxième coefficient de pondération dans une période prédéterminée incluse dans le processus de réduction de fluctuations quantiques, et un locus du premier coefficient de pondération ne croise pas une ligne de transition de phase de premier ordre lorsque le premier coefficient de pondération est représenté en tant que fonction avec une variable étant le deuxième coefficient de pondération,
des fluctuations quantiques sont appliquées à une pluralité de bits quantiques physiques et la force d'interactions entre les bits quantiques physiques est modifiée, à l'aide du circuit de recuit quantique (102), sur la base d'un premier signal de commande pour modifier le premier coefficient de pondération, d'un deuxième signal de commande pour modifier le deuxième coefficient de pondération, et d'un troisième signal de commande pour modifier un troisième coefficient de pondération utilisés pour réduire les fluctuations quantiques,
le Hamiltonien représente le problème d'optimisation combinatoire comme une somme du terme contrainte et du terme d'optimisation, et
le terme contrainte représente une condition de contrainte qui est imposée entre la pluralité de bits quantiques physiques et le terme objectif est différent du terme contrainte.

8. Programme informatique comprenant des instructions qui, lorsque le programme est exécuté par un appareil arithmétique (100) comprenant des circuits de bits quantiques composés d'une pluralité de bits quantiques physiques, d'un moyen de commande (101) et d'un circuit de recuit quantique (102), amènent l'appareil arithmétique (100) à réaliser le procédé selon la revendication 7.

Fig. 1

ENERGY

$|000\cdots0\rangle$

$|101\cdots0\rangle$

$|111\cdots1\rangle$

B1

COMBINATION OF STATES OF
QUANTUM BITS

Fig. 2

$$-\!\bigcirc\!\!\rightarrow \;=\; \bigcirc \;+\; \bigcirc \;=\; \frac{1}{\sqrt{2}}\left(|0\,\rangle + |1\,\rangle\right)$$

F i g.  3

$$H(s) = -(1-s) \sum_{i=1}^{N} \sigma_i^x + sH_{Ising}$$

$$\otimes_i = \frac{1}{\sqrt{2}} (|\uparrow\rangle_i + |\downarrow\rangle_i)$$

ENERGY

COMBINATION OF STATES OF
QUANTUM BITS

0

ENERGY

COMBINATION OF STATES OF
QUANTUM BITS

s

COMPLETION OF ANNEALING : 1

Fig. 4

Fig. 5

Fig. 6

Fig. 7

Fig. 8

100

## ARITHMETIC APPARATUS

101

CONTROL UNIT

Fig. 9

100

ARITHMETIC APPARATUS

101

CONTROL UNIT

102

QUANTUM ANNEALING UNIT

103

READING UNIT

Fig. 10

Fig. 11

Fig. 12

Fig. 13

Fig. 14

Fig. 15

Fig. 16

Fig. 17

Fig. 18

Fig. 19

100

ARITHMETIC APPARATUS

1001

PROCESSOR

1002

MEMORY

1003

QUANTUM BIT CIRCUIT

Fig. 20

# EP 4 027 274 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H08050572 A

### Non-patent literature cited in the description

- **WOLFGANG LECHNER**. Quantum Approximate Optimization with Parallelizable Gates. ARXIV.ORG, CORNELL UNIVERSITY LIBRARY, 04 February 2018
- **YUYA SEKI et al.** Quantum annealing with antiferromagnetic fluctuations. *Phys. Rev. E,* vol. 85, 051112
- **W. LECHNER** ; **P. HAUKE** ; **P. ZOLLER**. *Sci Adv*, 2015, vol. 1